# EUROPEAN PATENT SPECIFICATION

(11) **EP 1 990 355 B1**
(45) Date of publication and mention of the grant of the patent: **25.07.2012**
(21) Application number: 07009499.0
(22) Date of filing: 11.05.2007
(51) Int. Cl.: C08G 63/672, C08G 63/664, C08G 18/48, C08G 65/26

(54) **Use of propolylene oxide adducts**
Verwendung von Propolylenoxid-Addukten
Utilisation d'adducts d'oxyde de propylène

(43) Date of publication of application: 12.11.2008
(73) Proprietor: Cognis IP Management GmbH, 40589 Düsseldorf (DE)
(72) Inventor: Bigorra Llosas, Joaquín, 08201 Sabadell (ES); Llaurado, Luis, 08440 Cardedeu (Barcelona) (ES); Gusi, Francesc, 08028 Barcelona (ES)

(56) References cited:
- WO-A-2004/020497
- WO-A-2004/054958
- GB-A- 983 916
- JP-A- 8 169 944
- DATABASE WPI Week 200411 Derwent Publications Ltd., London, GB; AN 2004-102493 XP002441970 & JP 2003 171460 A 20 June 2003 (2003-06-20)

## Description

### Field of the invention

The present invention relates to the area of polymers and refers to the use of defined reactive diols and polyols based on hydroxycarboxylic or polycarboxylic acids as monomers and reactive solvents.

### Background of the invention

A diol or glycol is a chemical compound containing two hydroxyl groups. Vicinal diols have hydroxyl groups attached to adjacent atoms. Examples of vicinal diol compounds are ethylene glycol and propylene glycol. Geminal diols have hydroxyl groups which are bonded to the same atom. Diols represent important intermediates, especially for the production of polymers such as polyesters and polyurethanes:

**R-COOH + HO-[Y]-OH + HOOC-R → R-CO-O-[Y]-O-OC-R + 2 H₂O**

**R-N=C=O + HO-[Y]-OH → R-NH-CO-O-[Y]-O-OC-NH-R**

Quite a number of diols are used as monomers for making polyesters or polyurethanes: typical examples encompass glycols, especially ethylene glycol and propylene glycol. In case it is desirable to have molecules with a longer chain length than the hydrogenation products of dicarboxylic acid, for example, 1,6-hexanediol or 1,12-dodecandiol are rather useful. A third group of diols comprises the ring-opening products of epoxidised olefins, for example, the ring opening product of 1,2-epoxydodecane with water.

A serious disadvantage, however, is that diols according to the state of the art usually exhibit either an unsatisfying polarity or lack of a chemical structure which is either too short-chained or disadvantageous for other reasons. For example, glycols such as ethylene glycol or propylene glycol, as well as the longer chained α,ω-diols, are rather suitable for the production of symmetrical polymers, however, the polarity of the diols becomes the poorer the longer the carbon chain is. On the other hand, ring-opening products of epoxides exhibit a much better polarity due to vicinal OH groups, however they do not allow to produce symmetrical polymers. Although it is theoretically possible to synthesise tailor-made diols meeting all requirements with regard to polarity and structure, the state of the art suggests only rather complex and cost-intensive solutions which are not suitable to be reduced into practice.

A second problem relates to the fact that polymers are usually sold as solutions or dispersions, which require specific organic solvents. Suitable solvents encompass aromatic compounds, alcohols, and ketones, which all share the same disadvantage of being highly volatile. Solvents with high VOC, however, become more and more restricted for environmental reasons.

Therefore, the object of the present invention has been to find one solution for two very different problems for the polymer industry. The first problem underlying the invention has been to develop new diols with improved polarity and high flexibility with respect to their chemical structure which are obtainable with little technical afford. The second problem relates to the identification of new solvents for polymer solutions or dispersions, which allows production of compositions with high solids matter at low viscosity while the VOC is reduced at the same time.

### Detailed description of the invention

The present invention refers to the use of adducts of 2 to 50, preferably 4 to 15 moles propylene oxide to hydroxycarboxylic acids or polycarboxylic acids as monomer or co-monomer components in the production of polyesters and polyurethanes or reactive solvents for polymers.

Surprisingly it has been observed that propylene oxide adducts of hydroxycarboxylic and/or polycarboxylic acids solve the complex problem in an ideal way. The propoxylation of the molecules leads to the formation of diols or polyols depending on the number of carboxylic acid functions in the molecule. The -COO- function near the terminal OH group improves the polarity of the molecule, while the preferred chemical structure of the diol or polyol can be selected in a wide range by choosing the adequate hydroxycarboxylic acid or polycarboxylic acid, in particular dicarboxylic acid. The esterification can be conducted according to known manners and represents a standard unit process within the chemical industry. At the same time, the new diols exhibit also very good solvent properties for polyesters and polyurethanes, Using the new products as solvents allows to increase the amount of solids in the composition, while viscosity is maintained, or to decrease viscosity while maintaining the solids amount - depending on the kind of product the market requires. Due to the free hydroxyl groups in these new solvents they can react with isocyanates together with the hydroxyl groups of the resins, reducing the amount in VOC.

### Hydroxycarboxylic acids

Useful hydroxycarboxylic acid serving as starting materials for the preparation of the diols or polyols to be used according to the invention can be selected from the group consisting of glycolic acid, lactic acid, (iso)citric acid, malic acid, tartaric acid, ricinoleic acid and 12-hydroxy staeric acid. The preferred species are lactic acid and ricinoleic acid.

### Polycarboxylic acids

Useful dicarboxylic acids serving also as starting materials for the diols or polyols to be use according to the invention are selected from the group comprising the aliphatic, saturated or unsaturated C₂-C₁₄ dicarboxylic acids, namely maleic acid, sebacic acid, succinic acid and preferably adipic acid.

### Propoxylation

The preparation of the diols and polyols can be conducted according to known manners. Usually the propoxylation is carried out in a stirred pressure reactor under pressures of 1 to 10 and preferably 2 to 7 bar and a temperature of 100 to 200 and preferably 150 to 190 °C. The reaction usually needs the presence of a catalyst which is preferably a homogeneous, sometime also heterogeneous alkaline catalyst like for example sodium methylate or potassium tert.butylate. The catalyst is added in amounts of 0.01 to 1, preferably 0.05 to 0.5 % b.w. calculated on the starting material. In case of hydroxycarboxylic acids propylene oxide can be added to the hydroxyl function and/or inserted into the carbonyl bond. In case of poly- or in particular dicarboxylic acids of course only insertion takes place. The molar ratio between the hydroxycarboxlic or respectively polycarboxylic acids on one side and propylene oxide on the other can differ within broad ranges. For application reasons and with respect to the handling of the final products, which usually should be liquid at room temperature, the molar ratio shall lie on average within 2 to 50 and preferably 4 to 15. These numbers should be understood as the molar ratio of the components at the start of the reaction. For example, in case 20 Moles propylene oxide are added to 1 Mol adipic acid, the propylene oxide distribution to the two carboxylic acids groups will follow statistical rules, which means on average one will find 10 Moles inserted in each of the carbonyl bonds.

In the alternative it is also possible to obtain the diols and polyols to be used according to the present invention by esterification of the respective acids with oligopropyleneglycols such as di- or tripropyleneglycol. This represents a suitable way in case the intended degree of propoxylation or better to say the average number of propylene oxide units in the molecule is small and there is no particular need to remove non-reacted glycols from the product.

### Example 1

### Ricinoleic acid+5,5PO

A pressure reactor was loaded with 558 g (1.8 Moles) ricinoleic acid and 4 g of an aqueous potassium hydroxide solution (50 % b.w.). After having purged the reactor a couple of times with nitrogen and vacuum to eliminate all traces of oxygen 580 g (10 Moles) propylene oxide were added. The temperature was adjusted to 150 to 170 °C and the pressure maintained at 2 to 2.5 bar. Once the addition was finished the reactor was maintained for another hour at 170 °C and subsequently cooled down und depressurised. The propoxylated ricinoleic acid was obtained as a yellow to brownish liquid.

### Example 2

### Ricinoleic acid+11 PO

A pressure reactor was loaded with 558 g (1.8 Moles) ricinoleic acid and 6 g of an aqueous potassium hydroxide solution (50 % b.w.). After having purged the reactor a couple of times with nitrogen and vacuum to eliminate all traces of oxygen 1,160 g (20 Moles) propylene oxide were added. The temperature was adjusted to 150 to 170 °C and the pressure maintained at 2 to 2.5 bar. Once the addition was finished the reactor was maintained for another hour at 170 °C and subsequently cooled down und depressurised. The propoxylated ricinoleic acid was obtained as a brownish liquid.

### Example 3

### Adipic acid+8PO

A pressure reactor was loaded with 730 g (5 Moles) adipic acid and 5 g of an aqueous potassium tert.butylate solution (50 % b.w.). After having purged the reactor a couple of times with nitrogen and vacuum to eliminate all traces of oxygen 2,320 g (40 Moles) propylene oxide were added. The temperature was adjusted to 160 to 190 °C and the pressure maintained at 2.5 to 3 bar. Once the addition was finished the reactor was maintained for another hour at 180 °C and subsequently cooled down und depressurised. The propoxylated adipic acid was obtained as a yellow to brownish liquid.

## Claims

1. Use of adducts of 2 to 50 moles propylene oxide to one mole of
(a) a hydroxycarboxylic acid selected from the group consisting of glycolic acid, lactic acid, (iso)citric acid, malic acid, tartaric acid, ricinoleic acid and 12-hydroxy stearic acid or
(b) a polycarboxylic acid selected from the group consisting of adipic, maleic, succinic and sebacic acid
as monomer or co-monomer components in the production of polyesters.

2. Use of adducts of 2 to 50 moles propylene oxide to one mole of
(a) a hydroxycarboxylic acid selected from the group consisting of glycolic acid, lactic acid, (iso)citric acid, malic acid, tartaric acid, ricinoleic acid and 12-hydroxy stearic acid or
(b) a polycarboxylic acid selected from the group consisting of adipic, maleic, succinic and sebacic acid
as reactive solvents for polymers selected from the group consisting of polyesters and polyurethanes.

3. Use according to Claims 1 and/or 2, **characterised in that** said adducts to hydroxy- or polycarboxylic acids comprise on average 4 to 15 propylene oxide units.

## Patentansprüche

1. Verwendung von Addukten von 2 bis 50 mol Propylenoxid an ein Mol
(a) einer Hydroxycarbonsäure aus der Gruppe bestehend aus Glykolsäure, Milchsäure, (Iso)-citronensäure, Äpfelsäure, Weinsäure, Ricinolsäure und 12-Hydroxystearinsäure oder
(b) einer Polycarbonsäure aus der Gruppe bestehend aus Adipinsäure, Maleinsäure, Bernsteinsäure und Sebacinsäure
als Monomer- oder Comonomerkomponenten bei der Herstellung von Polyestern.

2. Verwendung von Addukten von 2 bis 50 mol Propylenoxid an ein Mol
(a) einer Hydroxycarbonsäure aus der Gruppe bestehend aus Glykolsäure, Milchsäure, (Iso)-citronensäure, Äpfelsäure, Weinsäure, Ricinolsäure und 12-Hydroxystearinsäure oder
(b) einer Polycarbonsäure aus der Gruppe bestehend aus Adipinsäure, Maleinsäure, Bernsteinsäure und Sebacinsäure
als reaktive Lösungsmittel für Polymere aus der Gruppe bestehend aus Polyestern und Polyurethanen.

3. Verwendung nach den Ansprüchen 1 und/oder 2, **dadurch gekennzeichnet, dass** die Addukte an Hydroxy- oder Polycarbonsäuren durchschnittlich 4 bis 15 Propylenoxid-Einheiten enthalten.

## Revendications

1. Utilisation d'adduits de 2 à 50 moles d'oxyde de propylène sur une mole de ce qui suit :
(a) un acide hydroxycarboxylique choisi dans le groupe constitué par l'acide glycolique, l'acide lactique, l'acide (iso)citrique, l'acide malique, l'acide tartrique, l'acide ricinoléique et l'acide 12-hydroxystéarique, ou
(b) un acide polycarboxylique choisi dans le groupe constitué par les acides adipique, maléique, succinique et sébacique,
en tant que composants de monomère ou de comonomère dans la production de polyesters.

2. Utilisation d'adduits de 2 à 50 moles d'oxyde de propylène sur une mole de ce qui suit :
(a) un acide hydroxycarboxylique choisi dans le groupe constitué par l'acide glycolique, l'acide lactique, l'acide (iso)citrique, l'acide malique, l'acide tartrique, l'acide ricinoléique et l'acide 12-hydroxystéarique, ou
(b) un acide polycarboxylique choisi dans le groupe constitué par les acides adipique, maléique, succinique et sébacique,
en tant que solvants réactifs pour des polymères choisis dans le groupe constitué de polyesters et de polyuréthanes.

3. Utilisation selon les revendications 1 et/ou 2, **caractérisée en ce que** lesdits adduits pour les acides hydroxy- ou polycarboxyliques comprennent en moyenne 4 à 15 motifs d'oxyde de propylène.
